# EUROPÄISCHE PATENTSCHRIFT

(11) **EP 0 702 074 B1**
(45) Veröffentlichungstag und Bekanntmachung des Hinweises auf die Patenterteilung: **13.11.2002**
(21) Anmeldenummer: 95113982.3
(22) Anmeldetag: 06.09.1995
(51) Int. Cl.: C09K 7/06

(54) **Mischungen enthaltend Acetale auf Basis von Dialdehyden**
Mixtures containing acetals based on dialdehydes
Mélanges contenant des acétales à base de dialdéhydes

(30) Priorität: 15.09.1994 DE 4432841
(43) Veröffentlichungstag der Anmeldung: 20.03.1996
(73) Patentinhaber: Clariant GmbH, 65929 Frankfurt am Main (DE)
(72) Erfinder: Hille, Martin, Dr., D-65835 Liederbach (DE); Wittkus, Heinz, D-60529 Frankfurt am Main (DE); Weinelt, Frank, Dr., D-84508 Burgkirchen (DE)

(56) Entgegenhaltungen:
- EP-A- 0 386 636
- EP-A- 0 391 252
- EP-A- 0 512 501
- WO-A-91/19771
- WO-A-93/16145

## Beschreibung

Weltweit werden etwa 10 - 20 % aller Bohrungen mit Invertemulsionsspülungen niedergebracht. Vielen wasserbasischen Bohrspülungen setzt man Öle zur Verbesserung der Eigenschaften zu, die als Emulsionsbohrspülungen bezeichnet werden. Zu Invertemulsionsspülungen geht man über, wenn wasserbasische Bohrspülungen die Grenzen ihrer Leistungsfähigkeit erreicht haben. Invertemulsionsspülungen sind vorteilhafter in stabilen, wasserempfindlichen Formationen und bei geneigten Bohrungen. Sie sind bis zu sehr hohen Temperaturen stabil und geben einen ausgezeichneten Korrosionsschutz. Nachteile sind der höhere Preis, das größere Risiko beim Durchbohren von Gaslagerstätten, die schwierigere Handhabung durch die Mannschaft am Turm und die größeren Umweltprobleme. Für die Invertemulsionsspülungen mit der durchgehenden Kohlenwasserstoffphase werden Fraktionen des Rohöls wie Dieselöl, gereinigtes Dieselöl mit unter 0,5 % Aromaten (clean oil), Weißöle oder Folgeprodukte wie Olefine oder Alkylbenzole eingesetzt. Es sind reine Kohlenwasserstoffe, welche unter den anaeroben Bedingungen im Bohrkleinschlamm auf dem Meeresboden nicht abgebaut werden. Die Invertemulsionsbohrspülungen enthalten Reagenzien, welche neben der Emulsionsstabilisierung die Ölbenetzung aller Feststoffe in der Spülung und des zugebohrten Bohrkleins sichern müssen. Das übertage abgetrennte Bohrklein ist ölbenetzt und muß gesondert entsorgt werden. Offshore kommt es zu erheblichen umweltbeschädigenden Effekten, wenn das Bohrklein oder Spülungsvolumina in das Meer gelangen. Bohrkleinschlamm und die schwere Spülung sinken auf den Meeresboden und fließen mit den Gezeiten und Meeresströmungen teilweise bis an die Küsten, z. B. das Wattenmeer. Auf diesem Weg bzw. seinem Ausbreitungsgebiet tötet der Schlamm durch Hydrophobierung alles Leben auf dem Meeresgrund. Ursprünglich war Dieselöl die Basis für Invertemulsionsbohrspülungen. In letzter Zeit verwendet man stärker gereinigte weniger toxische Dieselöle mit weniger als 0,5 % Aromaten sowie Weißöle, Olefine und Alkylbenzole.

Alle diese Kohlenwasserstoffe enthalten keinen Sauerstoff und bauen im ölbenetzten Bohrkleinschlamm auf dem Meeresboden nicht ab. Die geringere Toxizität ist fast unbedeutend, weil der die Umwelt schädigende Effekt durch die Kombination von anaerob auf dem Meeresboden nicht abbaubaren Kohlenwasserstoffen und organischen Reagenzien, welche zur Formulierung der Invertemulsionsbohrspülungen benötigt werden, verursacht wird. Diese Reagenzien sind notwendig, um alle Feststoffe der Bohrspülung wie Bentonit, Schwerspat und Bohrklein ölbenetzt zu halten.

Als besser biologisch abbaubare Basisöle hat man Verbindungen wie Alkohole EP-A-0398112, Ester EP-A-0398113 und Ether EP-A-0391251 vorgeschlagen und getestet. In Bezug auf Toxizität und biologischer Abbaubarkeit stellen diese Produkte einen Fortschritt dar, jedoch schränken die Anforderungen an ein Basisöl in Bezug auf Stockpunkt, Viskosität, Verseifbarkeit und Geruch deren Anwendung erheblich ein.

Die Verwendung von biologisch abbaubaren Triglyceriden pflanzlichen und tierischen Ursprungs in ölbasischen Bohrspülungen wird in US-A-4 374 737 und US-A-4 481 121 erläutert. Der Einsatz einfacher Esteröle in Invertemulsionsspülungen für Tiefbohrungen nach Erdöl und Erdgas wird in DE-A-38 42 659 und DE-A-38 42 703 beschrieben.

Die Viskosität und der Stockpunkt von natürlichen Fetten und Ölen ist abhängig von den Säurekomponenten in den Triglyceriden. Dadurch werden die technischen Anwendungsmöglichkeiten eingeschränkt. Flexibler, wenn auch weniger wirtschaftlich, können diese Eigenschaften mit Monoestern auf Basis Fettsäuren und Alkoholen eingestellt werden.

Es wurden auch höhere Alkohole gemäß EP-A-0 391 252 für ölbasische Bohrspülungen vorgeschlagen.

Bei linearen Alkoholen begrenzt der hohe Stockpunkt und bei verzweigten die schlechte biologische Abbaubarkeit deren Verwendung als umweltfreundliches Mineralölsubstitut. Höhere gerade noch etwas wasserlösliche Alkohole scheiden wegen ihrer hohen Fischtoxizität für die Verwendung in Offshore-Spülungen aus.

Der Nachteil der esterbasischen Invertemulsionsspülungen ist die mangelnde Stabilität dieser Verbindungen im alkalischen Bereich. Allgemein beträgt die Zusatzmenge 4 - 6 Lb/bbl Kalk (CaOH₂) zur Erzielung einer guten Stabilität von Invertemulsionsspülungen. Diese Menge bietet die notwendige Pufferreserve und Spülungsstabilität gegen eindringende saure Gase wie Kohlendioxid und besonders Schwefelwasserstoff. Für die Esterspülungen werden ausdrücklich nur 2 Lb/bbl Kalk und weniger empfohlen, um die besonders mit steigender Temperatur zunehmende Verseifung in Grenzen zu halten.

Mit der Verseifung ändert sich die Zusammensetzung der oleophilen Phase; es treten zunehmend Kalkseifen und freie Alkohole auf, wobei die Kalkseife im Turm zu sehr stabilen wachsartigen Ablagerungen führen und die zumeist hoch fischtoxischen Alkohole den Eintrag des ungereinigten Bohrkleins in das Meer sehr problematisch machen.

Besonders die Spaltkomponenten der Ester sind sehr gut biologisch abbaubar. Auf dem Meeresboden verbrauchen sie schnell den ohnehin geringen Sauerstoff und bilden anaerobe Zonen in denen z. B. auch H₂S entwickelt wird, welches dort alles Leben abtötet. Dies ist eine gravierende Umweltschädigung.

Es kommt beim praktischen Betrieb und besonders durch Zementeintrag zu störenden Eindickungen der Spülungen, die durch laufende Ergänzungsmengen und zusätzlichen Additiven in Grenzen gehalten werden müssen. Dadurch steigt der Bedarf an Estern gegenüber Mineralöl als Basis für Invertemulsionsspülungen erheblich an.

Aus all diesen Gründen eignen sich Invertemulsionsspülungen auf Basis Ester nur für flache und mitteltiefe Bohrungen.

In der EP-A-0 512 501 werden Acetale als Mineralölsubstitut für Invertemulsionsspülungen, Emulsionsspülungen, Motor-, Getriebe- und Schmieröl sowie Metallbearbeitungs-, Kühl-, Kühlschmiermittel- und Hydraulikflüssigkeiten vorgeschlagen. In der WO 93/16145 werden aliphatische Acetale als oder in der Ölphase von Bohrspülungen offenbart.

Acetale sind im neutralen und besonders im alkalischen Bereich extrem stabil. Invertemulsionsspülungen auf Basis Acetale sind allen wasser- und auch ölbasischen Spülungen beim Einsatz in tieferen Bohrungen überlegen, weil sich deren rheologisches Verhalten bei hohen Temperaturen im Bohrloch als gut kalkulierbar erwiesen hat. Unter diesen Bedingungen sinkt die plastische Viskosität ab, aber die Fließgrenzen, die Gelwerte und die Viskosität bei 6 rpm im Fann-Rheometer bleiben konstant, was einen ausgezeichneten Austrag des Bohrkleins auch besonders bei geneigten Bohrungen erbringt (SPE/IADC 29425).

Mit den Estern und besonders den Acetalen stehen heute auf dem Meeresboden anaerob abbaubare Substanzen zur Verfügung, welche den umweltschädigenden Effekt auf dem Meeresboden minimieren, weil sie durch den anaeroben Abbau die Ausbreitung und das Fließen auf dem Meeresboden stark begrenzen. Beim Einsatz dieser Produkte findet nach dem Ende des Bohrens eine schnelle Erholung der Ökologie des Meeresbodens statt.

Durch die Kombination der verschiedenen Aldehyde und Alkohole lassen sich Acetale herstellen, die eine niedrigere Viskosität und besonders einen niedrigeren Stockpunkt besitzen.

Es wurde nun gefunden, daß für die Emulsions- und Invertemulsionsbohrspülungen geeignete Acetale auf Basis von Dialdehyden mit Flammpunkten von über 60 °C allgemein gute Lösemittel für Ester und Alkohole sind. Deshalb lassen sich mit ihnen in weiten Bereichen homogene, biologisch gut abbaubare Gemische mit Estern und/oder Alkoholen herstellen, welche die geforderten niedrigen Viskositäten für Emulsions- und Invertemulsionsbohrspülungen besitzen, deren rheologische Profile sich den Bohrlochsbedürfnissen anpassen lassen.

Gegenstand der Erfindung sind somit Mischungen enthaltend Acetale auf Basis von Dialdehyden sowie mindestens eine der Komponenten oleophile Alkohole und/oder oleophile Ester, geeignet zur Herstellung von Invertemulsionsbohrspülungen und Emulsionsbohrspülungen. Sie ersetzen hierbei die bisher bekannten Basisöle, Dieselöl, gereinigtes Dieselöl, Weißöl, Olefine und Alkylbenzole ganz oder teilweise.

Mit den Gemischen von Acetalen auf Basis von Dialdehyden mit Estern und/oder Alkoholen bleiben die positiven Eigenschaften der Acetal-Invertemulsionsspülung in Abhängigkeit von der Zumischung weitgehend erhalten.

Die Verseifung der Ester wird drastisch verringert und die Thermostabilität gegenüber esterbasischen Invertemulsionsspülungen stark verbessert.

Die Ansprüche 2 bis 6 geben zweckmäßige Ausführungsformen der Mischung an.

Gegenstand der Erfindung ist ferner die Verwendung gemäß Anspruch 7 sowie die Invertemulsionsbohrspülung und Emulsionsbohrspülung gemäß Anspruch 8.

Als Acetale eignen sich Acetale hergestellt aus Dialdehyden, insbesondere mit 2 bis 10 C-Atomen, wie Glyoxal, Weinsäuredialdehyd, Succindialdehyd, Malein- und Fumarsäuredialdehyd, vorzugsweise aber Glyoxal, mit einwertigen Alkoholen mit 1 bis 25, insbesondere 4 bis 20 Kohlenstoffatomen. Sie können verzweigt oder unverzweigt, gesättigt oder ungesättigt und aliphatisch oder aromatisch sein. Die Acetale können auch aus einem Gemisch bestehen, welches aus verschiedenen oder aus kettenreinen Alkoholen und/oder Aldehyden hergestellt worden ist. Die Herstellung der Acetale kann analog zu EP-A-0 512 501 vorgenommen werden.

Als oleophile Alkohole eignen sich lineare Alkohole, verzweigte Alkohole, ungesättigte Alkohole und/oder verzweigte ungesättigte Alkohole. Bevorzugt werden Alkohole mit 8 bis 25, besonders bevorzugt 10 bis 16 Kohlenstoffatomen. Insbesondere bevorzugt sind lineare Alkohole mit 10 bis 16 Kohlenstoffatomen. Der Begriff oleophil steht für Alkohole deren Wasserlöslichkeit bei Raumtemperatur unter 1 Gew.-% und insbesondere bei nicht mehr als 0,5 Gew.-% liegt.
Geeignete Alkohole sind insbesondere Decanol, Dodekanol, Tetradecanol, Cocosfettalkohol, Laurylalkohol und α-Methyldecanol. Die Alkohole sind als kommerzielle Handelsprodukte erhältlich.

Als olephile Ester eignen sich Ester auf Basis von mono-, di und/oder trifunktionellen Alkoholen und C₁-C₂₅-Carbonsäuren.
Bei den monofunktionellen Alkoholen handelt es sich um Alkohole mit 8 bis 25 Kohlenstoffatomen, welche linear, verzweigt, ungesättigt und/oder aromatisch sein können.
Bei den difunktionellen Alkoholen handelt es sich um Alkohole mit bis 18 Kohlenstoffatomen, vorzugsweise 2 bis 18 Kohlenstoffatomen, welche gegebenenfalls auch als Polyglykolether mit bis zu 6 Ethylen- und/oder Propylenalkylen vorliegen. Beispiele für difunktionelle Alkohole sind Ethylen-, Propylen- und Butylenglykol sowie Dialkanolamine wie Diethanolamin.
Bei den trifunktionellen Alkoholen handelt es sich um Alkohole mit bis zu 6 Kohlenstoffatomen, vorzugsweise 2 bis 6 Kohlenstoffatomen, beispielsweise Glycerin und Trialkanolamine beispielsweise Triethanolamin.
Bei den vorstehend genannten C₁-C₂₅-Carbonsäuren werden mono-, di-, und/oder trifunktionelle Carbonsäuren umfasst, welche linear, verzweigt, ungesättigt und aromatisch sind.
Beispiele für monofunktionelle Carbonsäuren natürlichen Ursprungs sind Cocosfettsäure, Stearinsäure, Ölsäure und Talgfettsäure.
Beispiele für difunktionelle Carbonsäuren sind Oxalsäure, Malonsäure, Bernsteinsäure und Phthalsäure.
Beispiel für eine trifunktionelle Carbonsäure ist Zitronensäure.
Darüber hinaus können als oleophile Ester auch Triglyceride pflanzlichen und tierischen Ursprungs verwendet werden. Beispiele für Triglyceride pflanzlichen Ursprungs sind Sojabohnenöl, Rüböl, Erdnußöl, Leinsamenöl, Maisöl, Reisöl, Rizinusöl, Cocosöl, Palmkernöl und Olivenöl. Beispiele für Triglyceride tierischen Ursprungs sind Wal- und Fischöl.
Bei den aufgezählten oleophilen Estern bzw. Esterölen handelt es sich um Verbindungen, welche als kommerzielle Handelsprodukte erhältlich sind.
Die Herstellung aller Ester nicht natürlichen Ursprungs kann durch saure Katalyse aus den entsprechenden Alkoholen und Carbonsäuren erfolgen (P. Kaurer "Lehrbuch der Organischen Chemie, Seite 233 ff).
Der Begriff oleophil steht für Ester deren Wasserlöslichkeit bei Raumtemperatur unter 1 Gew.-% und insbesondere bei nicht mehr als 0,5 Gew.-% liegt.

Für die oleophile Phase einer Emulsion bzw. Invertemulsion zur Verwendung als Bohrspülung werden an deren Viskosität und Stockpunkt ganz bestimmte Anforderungen gestellt. Die Eigenschaften müssen eine gute Verpumpung unter Praxisbedingungen ermöglichen, d.h. die Viskosität der formulierten Spülung sollte bei Normalbedingungen (20°C) maximal 50-80 mPas betragen.

Die Viskosität der oleophilen Phase sollte daher 10 mPas, maximal jedoch 25 mPas bei 20°C nicht übersteigen und der Stockpunkt sollte mindestens unter -10°C liegen. Nur somit kann unter Offshore-Bedingungen, beispielsweise in der Nordsee nach Stillständen, eine pumpfähige Spülung formuliert werden. Beim Bohren in tropischen Gebieten können die Viskositäten etwas höher, z.B. 15-30 mPas, und der Stockpunkt bis +10°C liegen.

Die Mischungen enthaltend Acetal, sowie olephilen Alkohol und/oder oleophilen Ester sind als Komponente in den Invertemulsionsbohrspülungen und Emulsionsbohrspülungen gewöhnlich zu mindestens 0,5 Gew.-% vorhanden. Bei teilweisem bis hin zum vollständigen Ersatz der bisherigen Basisöle bzw. öligen Phase bilden sie bis zu 99,9 Gew.-% dieser Flüssigkeiten, mit Ausnahme der Emulsionsbohrspülungen, in denen ihr Anteil maximal 50 Gew.-% beträgt (Rest Wasser).

Üblicherweise enthalten Invertemulsionsbohrspülungen in der oleophilen Phase (durchgehende Phase) mindestens 5 Gew.-% Acetal, bevorzugt 5 bis 99 Gew.-% Acetal, und bis zu 95 Gew.-%, bevorzugt 1 bis 95 Gew.-% olephilen Alkohol und/oder Ester. Die vorstehenden Angaben beziehen sich auf die oleophile Phase.
Die Erfindung wird anhand der nachfolgenden Beispielen näher erläutert.

### Beispiele

Die Tabelle 1 zeigt Ester und Alkohole, welche die Anforderungen an die oleophile Phase der Invertemulsionsbohrspülungen in Bezug auf Viskosität und auch Stockpunkt nicht erfüllen.

Die Tabelle 2 zeigt Referenz- Beispiele für Mischungen von Acetalen auf Basis von Monoaldehyden mit Estern und Alkoholen der Tabelle 1.

Die Viskositäten und Stockpunkte der Gemische zeigen, wie reine Stoffe der Tabelle 1, welche nicht die Anforderungen einer oleophilen Phase für Invertemulsionsbohrspülungen erfüllen, mit Acetalen homogene, stabile Lösungen bilden, welche die geforderten Eigenschaften in Bezug auf Viskosität und Stockpunkt erfüllen.
Die in der Zusammenstellung genannten Werte für Stockpunkt und Viskosität zeigen die breite erfindungsgemäße Anwendbarkeit der Mischungen. Laborprüfung von Mischungen enthaltend Acetalen sowie oleophile Alkohole und/oder oleophile Ester als Substitute von Mineralölen in Invertemulsionspülungen:

### Spülungsformulierung:

Es werden 245 ml der erfindungsgemäßen Mischung aus Acetal, olephilem Alkohol und/oder oleophilem Ester in einem Hamilton Beach (HB) Mixer vorgelegt. Der HB-Mixer wird auf der Stellung "high speed" eingeschaltet. Portionsweise fügt man 8 g ®Tixogel (hydrophobierter Bentonit, Hersteller Südchemie) hinzu, 9 g anionischen Emulgator (70 %ig, Dodecylbenzosulfonat), 3 g kationischen Emulgator (85 %ig, Imidazolintyp) und 10 CaO. Das Gemisch wird 5 Min. gerührt. Danach erfolgt die portionsweise Zugabe von 105 ml CaCl₂-Lösung (20 %ig). Nach weiteren 10 Min. Rührzeit werden 275 g Bariumsulfat (g = 1,60 g/cm³ eingetragen, was die Dichte der Spülung auf 1,46 g/cm³ anhebt. Nochmals wird die gesamte Spülung 20 Min. gerührt. Anschließend wird die Rheologie (bei 50°C) und der Wasserverlust (25°C) der Spülung gemessen. Anschließend wird die Elektrische Stabilität (ES) in Volt mit dem Fann-Modell 23D vor und nach Alterung bei 65,5°C (18 Stunden) bestimmt.

Tabelle 3 zeigt die Rheologie von Invertemulsionsspülungen auf Basis Isobutyraldehyd-di-2-ethylhexylacetal und Mischungen davon mit Rüböl bei 50 °C.

Tabelle 4 zeigt die Rheologie von Invertemulsionsspülungen auf Basis Dihexylformal und Mischungen davon mit Rüböl bei 50°C.

Tabelle 5 zeigt die Rheologie von Invertemulsionsspülungen auf Basis Isobutyraldehyd-di-2-ethylhexylacetal und Mischungen davon mit Cocosalkohol (tech.) bei 50°C.

Tabelle 6 zeigt die Rheologie von Invertemulsionsspülungen auf Basis Isobutyraldehyd-di-2-ethylhexylacetal und Mischungen davon mit Sojaöl und α-Methyldecanol bei 50°C.

Die Werte für SV, PV, FL Gelstärke nach 10 Sekunden und die Gelstärke nach 10 Minuten wurden ermittelt gemäß API Recommended Practice, Standard Procedure of Field Testing Water-Based & Drilling Fluids 13 B-1(RP 13 B-1), Section 2, die Werte für WL (water loss) nach der gleichen Norm, Section 3.

Die rheologischen Profile der Invertemulsionsspülungen in den Tabellen 3-5 auf Basis von Gemischen aus Acetalen und Estern bzw. Alkoholen zeigen, daß sie die anwendungstechnischen Anforderungen dieses Spülungstyps erfüllen.

Teilweise lassen sich verbesserte rheologische Profile mit den Mischungen, d.h. höhere Viskositäten bei niedrigem Schergefälle als mit den reinen Acetalen erzielen.

**Tabelle 1**

| | Viskosität in mPas/20°C | Stockpunkt/°C |
|---|---|---|
| Rüböl | 72 | < -0 |
| Sojaöl | 60 | < -10 |
| Cocosfettalkohol (tech) | 28 | schon bei Normalbedingungen leichter Bodensatz |
| Laurylalkohol (tech) | 22 | 15 - 18 |

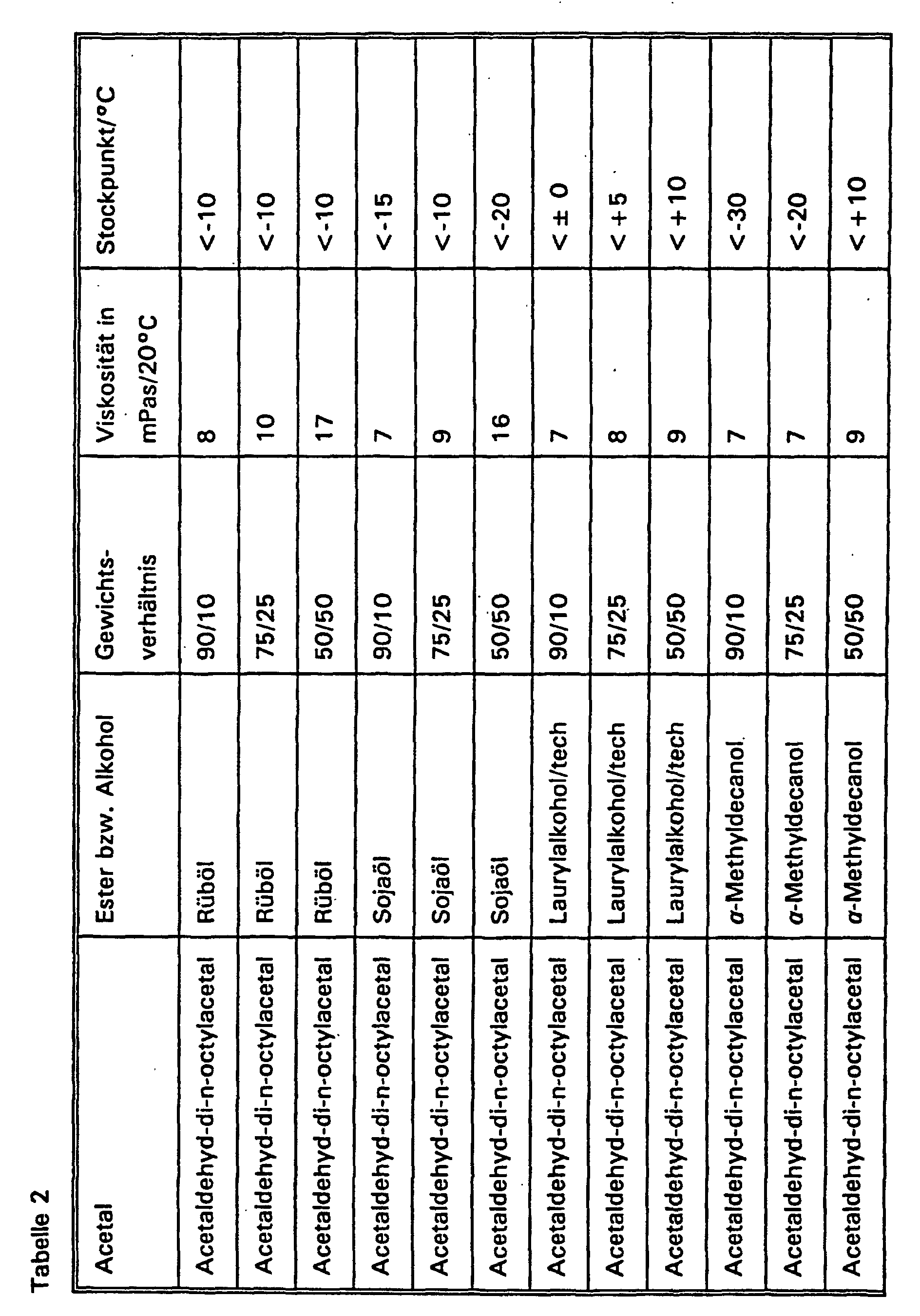

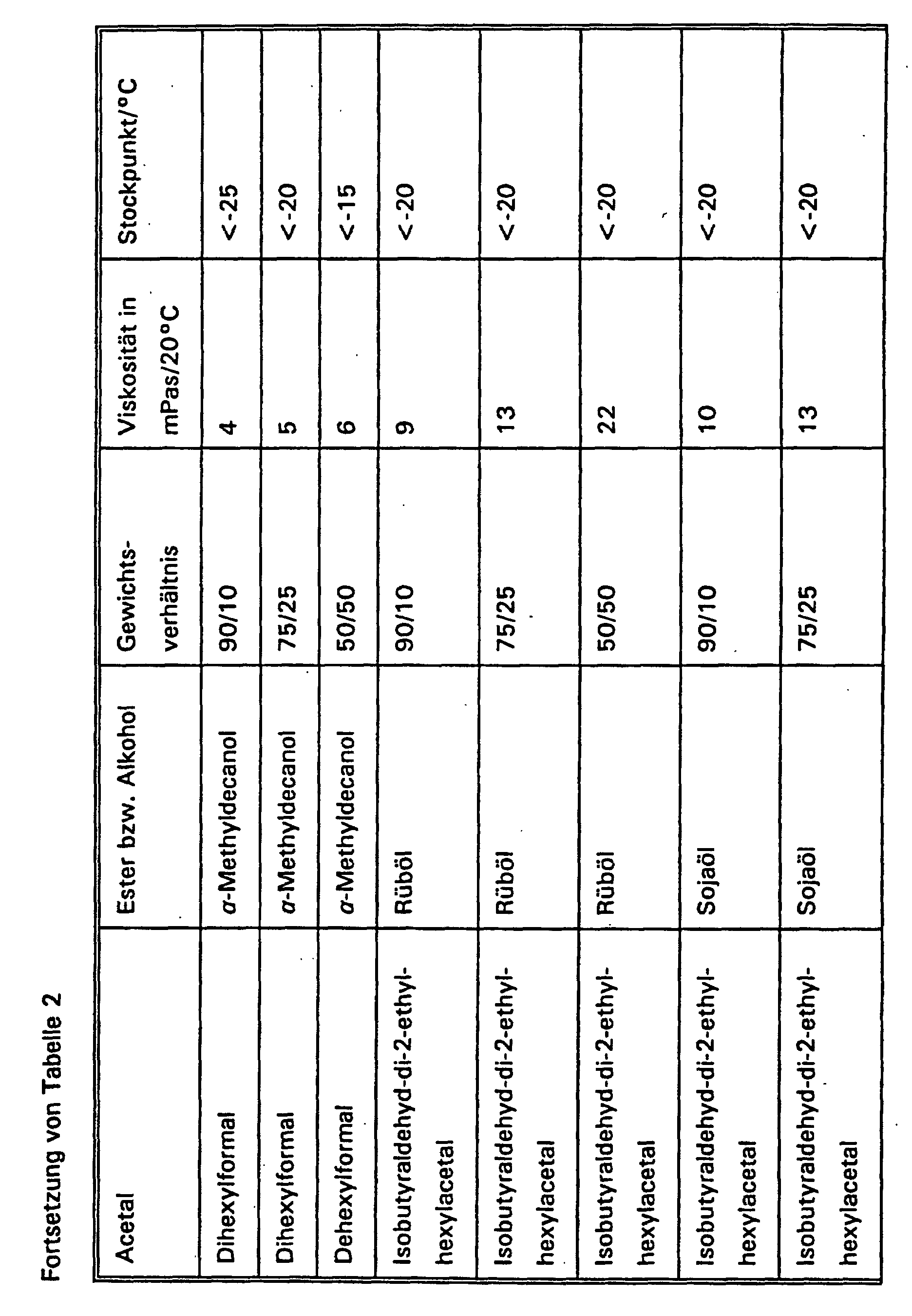

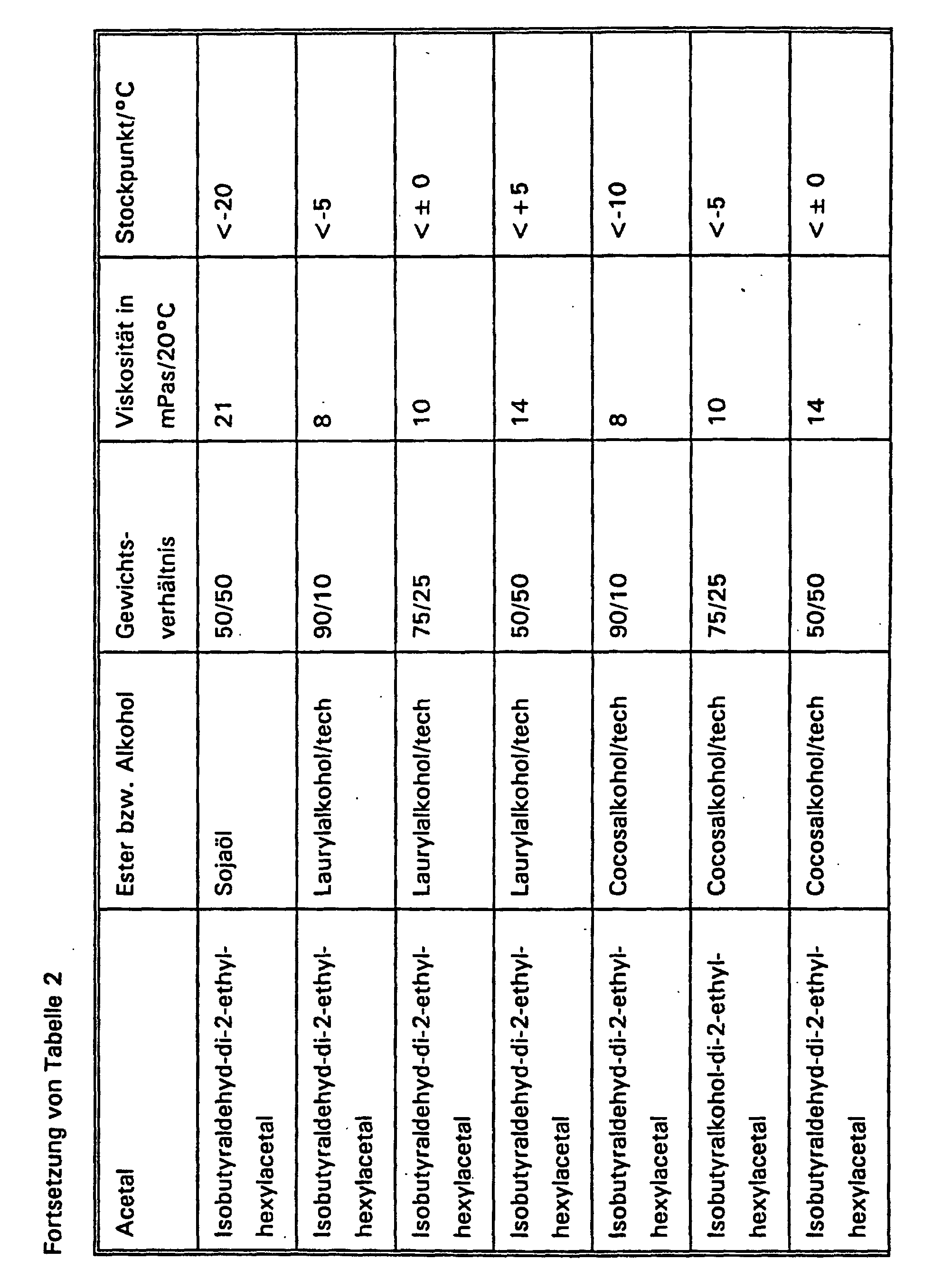

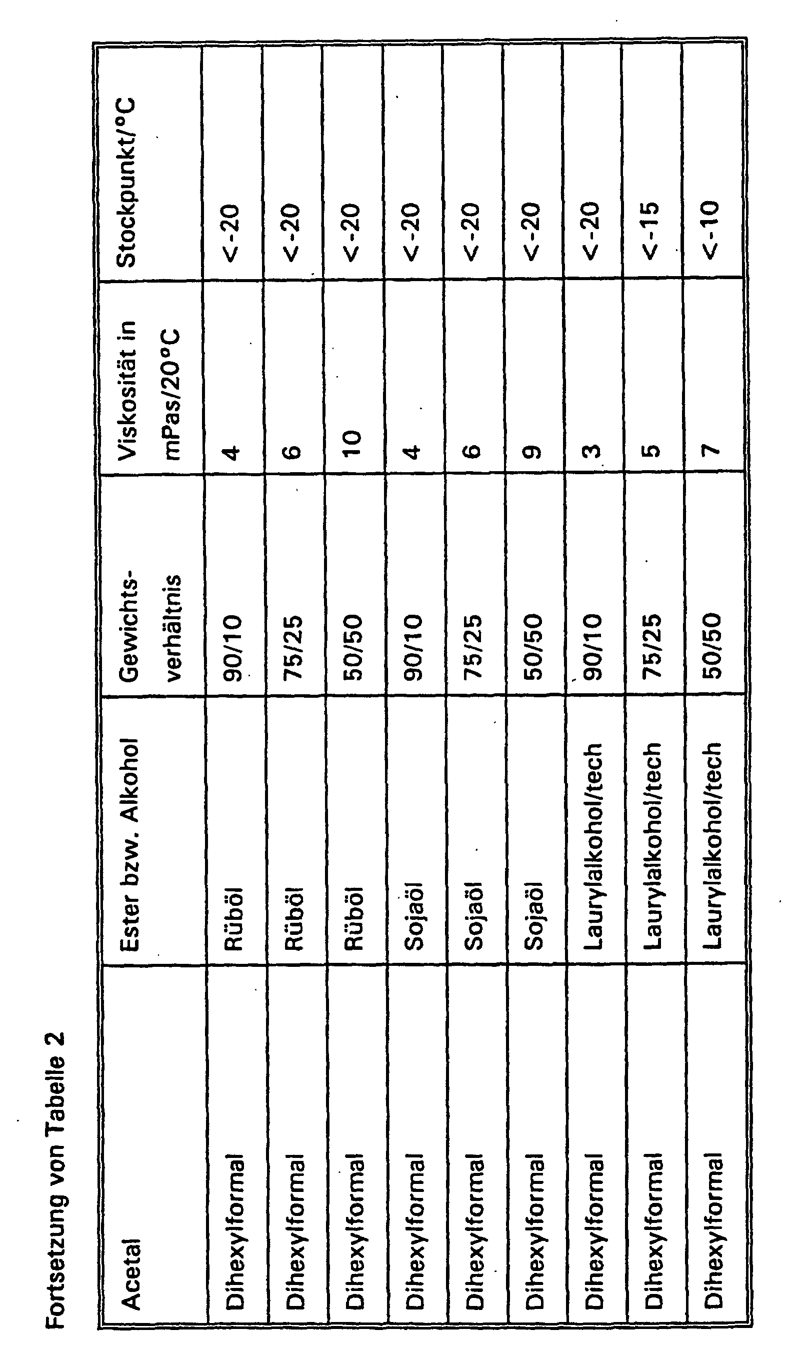

**Tabelle 3**

| Produkte | 1 | 2 | 3 | 4 |
|---|---|---|---|---|
| Isobutyraldehyd-di-2-ethylhexylacetal | 100 % | 90 % | 75 % | 50 % |
| Rüböl raff.A4 | 0 % | 10 % | 25 % | 50 % |
| ®Tixogel gb | 8 g | 8 g | 8 g | 8 g |
| ®Emulsogen OM 1 | 9 g | 9 g | 9 g | 9 g |
| ®Emulsogen OM 2 | 3 g | 3 g | 3 g | 3 g |
| CaO | 10 g | 10 g | 10 g | 10 g |
| CaCl₂ (20 %ig) | 105 ml | 105 ml | 105 ml | 105 ml |
| Schwerspat | 275 g | 275 g | 275 g | 275 g |

| Schergeschwindigkeit (1/sec) | Viskosität in | | | |
|---|---|---|---|---|
| | mPas | mPas | mPas | mPas |
| 1022 | 36 | 50 | 86 | 64 |
| 511 | 42 | 63 | 125 | 78 |
| 340 | 45 | 75 | 162 | 87 |
| 170 | 51 | 111 | 255 | 108 |
| 102 | 60 | 155 | 365 | 120 |
| 51 | 80 | 240 | 620 | 190 |
| 10 | 175 | 800 | 2250 | 600 |
| 5 | 250 | 1400 | 4300 | 1100 |
| Scheinbare Viskosität (mPas) | 36 | 50 | 86 | 64 |
| Plastische Viskosität (mPas) | 30 | 37 | 47 | 50 |
| Fließgrenze (lbs/100 sqft) | 12 | 26 | 78 | 28 |
| Gelstärke nach 10 sec./10 min. (lbs/100sqft) | 2/5 | 12/27 | 37/89 | 11/20 |
| ®Emulsogen OM 1 anionischer Emulgator auf Basis Dodecylbenzosulfonat (Hersteller: Hoechst AG) ®Emulsogen OM 2 kationischer Emulgator des Imidazolintyps (Hersteller: Hoechst AG) | | | | |

**Tabelle 4**

| Produkte | 1 | 2 | 3 | 4 |
|---|---|---|---|---|
| Dihexylformal | 100 % | 90 % | 75 % | 50 % |
| Rüböl raff.A4 | 0 % | 10 % | 25 % | 50 % |
| ®Tixogel gb | 8 g | 8 g | 8 g | 8 g |
| ®Emulsogen OM1 | 9 g | 9 g | 9 g | 9 g |
| ®Emulsogen OM2 | 3 g | 3 g | 3 g | 3 g |
| CaO | 10 g | 10 g | 10 g | 10 g |
| CaCl₂ (20 %ig) | 105 ml | 105 ml | 105 ml | 105 ml |
| Schwerspat | 275 g | 275 g | 275 g | 275 g |

| Schergeschwindigkeit (1/sec) | Viskosität in | | | |
|---|---|---|---|---|
| | mPas | mPas | mPas | mPas |
| 1022 | 20 | 41 | 88 | 235 |
| 511 | 28 | 60 | 145 | 350 |
| 340 | 33 | 76 | 194 | 417 |
| 170 | 45 | 117 | 315 | 570 |
| 102 | 55 | 170 | 460 | 780 |
| 51 | 80 | 280 | 800 | 1250 |
| 10 | 300 | 1050 | 3150 | 3250 |
| 5 | 400 | 2000 | 5700 | 5200 |
| Scheinbare Viskosität (mPas) | 20 | 41 | 88 | 235 |
| Plastische Viskosität (mPas) | 12 | 22 | 31 | 70 |
| Fließgrenze (lbs/100 sqft) | 16 | 38 | 119 | 280 |
| Gelstärke nach 10 sec./10 min. (lbs/100 sqft) | 4/8 | 18/19 | 54/56 | 82/84 |

**Tabelle 5**

| Produkte | 1 | 2 | 3 | 4 |
|---|---|---|---|---|
| Isobutyraldehyd-di-2-ethylhexylacetal | 100 % | 90 % | 75 % | 50 % |
| Rüböl raff.A4 | 0 % | 10 % | 25 % | 50 % |
| ®Tixogel gb | 8 g | 8 g | 8 g | 8 g |
| ®Emulsogen OM 1 | 9 g | 9 g | 9 g | 9 g |
| ®Emulsogen OM 2 | 3 g | 3 g | 3 g | 3 g |
| CaO | 10 g | 10 g | 10 g | 10 g |
| CaCl₂ (20 %ig) | 105 ml | 105 ml | 105 ml | 105 ml |
| Schwerspat | 275 g | 275 g | 275 g | 275 g |

| Schergeschwindigkeit (1/sec) | Viskosität in | | | |
|---|---|---|---|---|
| | mPas | mPas | mPas | mPas |
| 1022 | 36 | 36 | 73 | 121 |
| 511 | 42 | 44 | 105 | 172 |
| 340 | 45 | 49 | 132 | 207 |
| 170 | 51 | 66 | 201 | 288 |
| 102 | 60 | 85 | 280 | 370 |
| 51 | 80 | 120 | 450 | 550 |
| 10 | 175 | 350 | 1700 | 1700 |
| 5 | 250 | 500 | 3100 | 3000 |
| Scheinbare Viskosität (mPas) | 36 | 36 | 73 | 121 |
| Plastische Viskosität (mPas) | 30 | 28 | 41 | 70 |
| Fließgrenze (lbs/100 sqft) | 12 | 16 | 64 | 102 |
| Gelstärke nach 10 sec./10 min. (lbs/100sqft) | 2/4 | 6/9 | 29/29 | 28/30 |

**Tabelle 6**

| Produkte | 1 | 2 | 3 | 4 |
|---|---|---|---|---|
| Isobutyraldehyd-di-2-ethylhexylacetal | 100 % | 50 % | 50 % | 25 % |
| Sojaöl | 0% | 25 % | 10 % | 5 % |
| α-Methyldecanol | | 25 % | 40 % | 70 % |
| ®Tixogel gb | 8 g | 8 g | 8 g | 8 g |
| ®Emulsogen OM1 | 9 g | 9 g | 9 g | 9 g |
| ®Emulsogen OM2 | 3 g | 3 g | 3 g | 3 g |
| CaO | 10 g | 10 g | 10 g | 10 g |
| CaCl₂ (20 %ig) | 105 ml | 105 ml | 105 ml | 105 ml |
| Schwerspat | 275 g | 275 g | 275 g | 275 |

| Schergeschwindigkeit (1/sec) | Viskosität in | | | |
|---|---|---|---|---|
| | mPas | mPas | mPas | mPas |
| 1022 | 36 | 138 | 84 | 54 |
| 511 | 42 | 198 | 122 | 62 |
| 340 | 45 | 246 | 156 | 68 |
| 170 | 51 | 363 | 234 | 84 |
| 102 | 60 | 490 | 325 | 80 |
| 51 | 80 | 790 | 520 | 90 |
| 10 | 175 | 2800 | 1850 | 100 |
| 5 | 250 | 4900 | 3200 | 100 |
| Scheinbare Viskosität (mPas) | 36 | 138 | 84 | 54 |
| Plastische Viskosität (mPas) | 30 | 78 | 46 | 46 |
| Fließgrenze (lbs/100 sqft) | 12 | 120 | 66 | 16 |
| Gelstärke nach 10 sec./10 min. (lbs/100 sqft) | 2/4 | 47/48 | 32/32 | 2/4 |
| SV = Scheinbare Viskosität (mPas) PV = Plastische Viskosität (mPas) FL = Fließgrenze (Lb/100 sqft) | | | | |

## Patentansprüche

1. Zur Herstellung von Invertemulsionsbohrspülung und Emulsions- Bohrspülung geeignete Mischung enthaltend
A) 5 bis 99 Gew.-% Acetal, und 1 bis 95 Gew.-% mindestens einer der Komponenten B) und/oder C)
B) einen oleophilen Alkohol mit 8 bis 25 C-Atomen,
C) einen oleophilen Ester auf Basis von mono-, di- und/oder trifunktionellen Alkohol und C₁-C₂₅-Carbonsäure, **dadurch gekennzeichnet, dass** sie Acetale auf Basis von Dialdehyden enthält.

2. Mischung gemäß Anspruch 1, enthaltend Acetale auf Basis von Dialdehyden mit 2 bis 10 C-Atomen.

3. Mischung gemäß Anspruch 2, worin die Dialdehyde Glyoxal, Weinsäuredialdehyd, Succindialdehyd oder Malein- und Fumarsäuredialdehyd sind.

4. Mischung gemäß einem oder mehreren der Ansprüche 1 bis 3, **dadurch gekennzeichnet, dass** sie als oleophile Alkohole lineare Alkohole, verzweigte Alkohole, ungesättigte Alkohole und/oder verzweigte ungesättigte Alkohole enthält.

5. Mischung gemäß Anspruch 4, **dadurch gekennzeichnet, dass** sie oleophile Alkohole mit 10 bis 16 Kohlenstoffatomen enthält.

6. Mischung gemäß einem oder mehreren der Ansprüche 1 bis 5, **dadurch gekennzeichnet, dass** sie als oleophilen Alkohol einen linearen Alkohol mit 10 bis 16 Kohlenstoffatomen enthält.

7. Verwendung der Mischung gemäß einem der Ansprüche 1 bis 6 zur Herstellung von Invertemulsionsbohrspülungen und/oder Emulsionsbohrspülungen.

8. Invertemulsionsbohrspülung und/oder Emulsionsbohrspülung enthaltend die Mischung gemäß einem der Ansprüche 1 bis 6.

9. Invertemulsionsbohrspülung und/oder Emulsionsbohrspülung gemäß Anspruch 8, **dadurch gekennzeichnet, dass** die Viskosität der oleophilen Phase 30 mPas (gemessen bei 20°C) nicht übersteigt und der Stockpunkt unter +10°C liegt.

10. Invertemulsionsbohrspülung gemäß Anspruch 8 oder 9, **dadurch gekennzeichnet, dass** sie bis zu 50 Gew.-% der Mischung gemäß Anspruch 1 enthält.

## Claims

1. A mixture for the preparation of an inverted emulsion drilling mud or emulsion drilling mud, comprising
A) 5 to 99% by weight of acetal, and 1 to 95% by weight of at least one of components B) and/or C),
B) an oleophilic alcohol having 8 to 25 carbon atoms,
C) an oleophilic ester based on a mono-, di- and/or trifunctional alcohol and a C₁-C₂₅-carboxylic acid, which mixture comprises an acetal based on a dialdehyde

2. A mixture as claimed in claim 1, comprising an acetal based on a dialdehyde having 2 to 10 carbon atoms.

3. A mixture as claimed in claim 2, wherein the dialdehyds are glyoxal, tartaric acid dialdehyde, succinic dialdehyde or maleic and fumaric acid dialdehyde.

4. A mixture as claimed in one or more of claims 1 to 3, **characterized in that** it comprises, as oleophilic alcohols, a linear alcohol, branched alcohol, unsaturated alcohol and/or branched unsaturated alcohol.

5. A mixture as claimed in claim 4, **characterized in that** it comprises oleophilic alcohols having 10 to 16 carbon atoms.

6. A mixture as claimed in one or more of claims 1 to 5, **characterized in that** it comprises, as the oleophilic alcohol, a linear alcohol having 10 to 16 carbon atoms.

7. The use of a mixture as claimed in one of claims 1 to 6 for the preparation of an inverted emulsion drilling mud and/or emulsion drilling mud.

8. An inverted emulsion drilling mud and/or emulsion drilling mud comprising a mixture as claimed in one of claims 1 to 6.

9. An inverted emulsion drilling mud and/or emulsion drilling mud as claimed in claim 8, **characterized in that** the viscosity of the oleophilic phase does not exceed 30 mPas (measured at 20°C) and the setting point is below +10°C.

10. An inverted emulsion drilling mud as claimed in claim 8 or 9, **characterized in that** it comprises up to 50% by weight of the mixture claimed in claim 1.

## Revendications

1. Mélange convenant à la préparation d'une boue de forage émulsionnée inverse et d'une boue de forage émulsionnée, contenant
A) de 5 à 99 % en poids d'un acétal et de 1 à 95 % en poids d'au moins l'un des composants B) et/ou C),
B) un alcool oléophile ayant de 8 à 25 atomes de carbone,
C) un ester oléophile à base d'un mono-, d'un di- et/ou d'un trialcool et d'un acide carboxylique en C₁-C₂₅,
**caractérisé en ce qu'**il contient des acétals à base de dialdéhydes.

2. Mélange selon la revendication 1, contenant des acétals à base de dialdéhydes ayant de 2 à 10 atomes de carbone.

3. Mélange selon la revendication 2, dans lequel les dialdéhydes sont le glyoxal, le tartrodialdéhyde, le succinodialdéhyde, ou le maléo- et le fumarodialdéhyde.

4. Mélange selon l'une ou plusieurs des revendications 1 à 3, **caractérisé en ce qu'**il contient en tant qu'alcools oléophiles des alcools linéaires, des alcools ramifiés, des alcools insaturés et/ou des alcools insaturés ramifiés.

5. Mélange selon la revendication 4, **caractérisé en ce qu'**il contient des alcools oléophiles ayant de 10 à 16 atomes de carbone.

6. Mélange selon l'une ou plusieurs des revendications 1 à 5, **caractérisé en ce qu'**il contient en tant qu'alcool oléophile un alcool linéaire ayant de 10 à 16 atomes de carbone.

7. Utilisation du mélange selon l'une des revendications 1 à 6 pour préparer des boues de forage émulsionnées inverses et/ou des boues de forage émulsionnées.

8. Boue de forage émulsionnée inverse et/ou boue de forage émulsionnée contenant le mélange selon l'une des revendications 1 à 6.

9. Boue de forage émulsionnée inverse et/ou boue de forage émulsionnée selon la revendication 8, **caractérisée en ce que** la viscosité de la phase oléophile ne dépasse pas 30 mPa.s (mesurée à 20°C), et que le point d'écoulement est inférieur à +10°C.

10. Boue de forage émulsionnée inverse selon la revendication 8 ou 9, **caractérisée en ce qu'**elle contient jusqu'à 50 % en poids du mélange selon la revendication 1.
